# EUROPEAN PATENT APPLICATION

(11) **EP 1 308 188 A1**
(43) Date of publication of application: **07.05.2003**
(21) Application number: 02012861.7
(22) Date of filing: 11.06.2002
(51) Int. Cl.: A63B 22/02

(54) **Electrical treadmill with a weight scale connected to the console**

(30) Priority: 02.11.2001 CN 01254508
(71) Applicant: Wang, Leao, Taiping City, Taichung Hsien, Taiwan R.O.C. (TW)
(72) Inventor: Wang, Leao, Taiping City, Taichung Hsien, Taiwan R.O.C. (TW)
(74) Representative: Reichel, Wolfgang, Dipl.-Ing.

(57) **Abstract**

The present invention relates to an electric treadmill to whose console the weight of the operator is automatically sent. The electric treadmill includes an upright frame, a base frame, a base and a rear supporting bar. A console is mounted on the upright frame, and a handrail is fitted to either side thereof. A motor-driven assembly is fitted to the base frame which a continuous belt circles for an in-place rotation. The electric treadmill includes a scale in connection with the console so that the weight parameter of the operator can be automatically fed into the console whereupon an optimal exercise session for the operator is automatically calculated by a built-in program.

## Description

### BACKGROUND OF THE INVENTION

### 1. Field of the Invention

The present invention relates to an electric treadmill to whose console the weight of the operator is automatically sent, and more particularly, to a treadmill in which an optimal exercise session for the operator will be automatically calculated by a built-in program so that the present invention is practical and convenient in use.

### 2. Description of the Prior Art

A few personal details of the operator, such as age, sex, etc. can be fed into the console of the conventional electric treadmill before he takes the exercise session. Even, the desired duration of the exercise session or the desired consumption of calories can also be fed in the console, and the built-in program can calculate the optimal exercise session (including the exercise duration, speed, slope, etc.) in accordance with the fed-in data. Therefore, it's a user-oriented design.

However, the parameters of age, sex or calorie represent great variables for different people. In brief, two persons with the same age and sex do not necessarily have the same or similar physical state. Thus, it doesn't meet the personal needs when one standard is applied to every operator.

### SUMMARY OF THE INVENTION

It is a primary object of the present invention to remove the above-mentioned drawbacks and to provide an electric treadmill in whose console the weight parameter of the operator can be automatically fed in order to calculate an optimal exercise session for the operator.

It is another object of the present invention to provide an electric treadmill which includes a scale in connection with the console so that the operator can be easily and conveniently weighed before operation.
These objects are solved by claims 1 and 3, respectively.

### BRIEF DESCRIPTION OF THE DRAWINGS

The accomplishment of this and other objects of the invention will become apparent from the following description and its accompanying drawings of which:
FIG. 1 is a perspective view of a preferred embodiment of the present invention;
FIG. 2 is a perspective view of another preferred embodiment of the present invention; and
FIG. 3 is a perspective view of a further preferred embodiment of the present invention.

### DETAILED DESCRIPTION OF THE PREFERRED EMBODIMENT

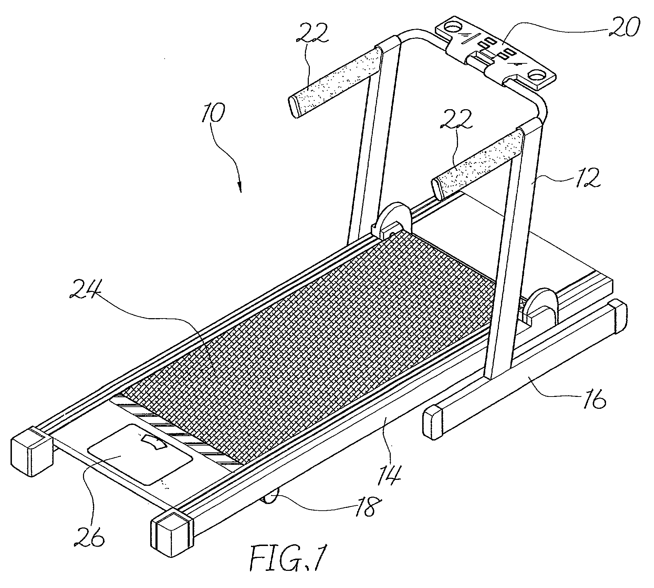

First of all, referring to FIG. 1, 2 and 3, the electric treadmill 10 stated by the present invention includes an upright frame 12, a base frame 14, a base 16 and a rear supporting bar 18. A console 20 is mounted on the upright frame 12, and a handrail 22 is fitted to either side thereof. A motor-driven assembly (not shown) is fitted to the base frame 14 which a continuous belt (not shown) circles for an in-place rotation.

The electric treadmill 10 includes a scale 26 in connection with the console 20 so that the weight parameter of the operator can be automatically fed into the console 20 whereupon an optimal exercise session for the operator is automatically calculated by a built-in program.

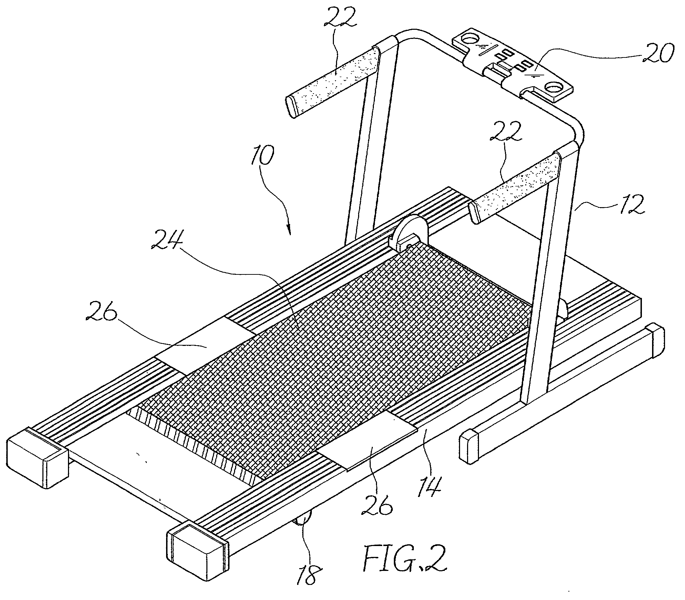

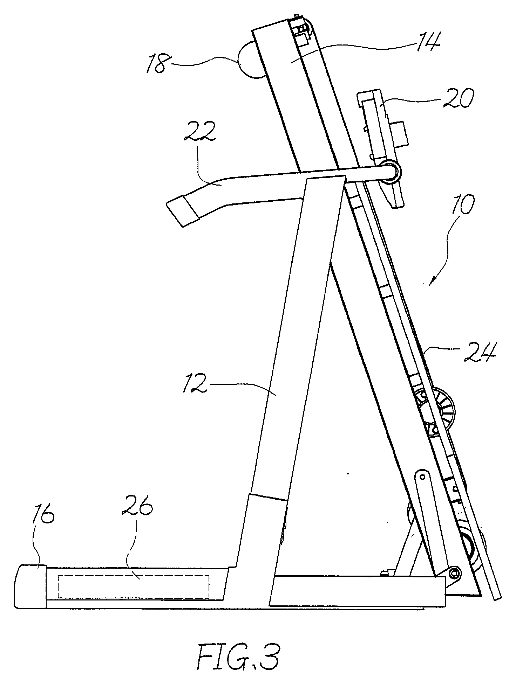

As shown in FIG. 1, 2 and 3, the present invention can be fitted to all kinds of the treadmills when it doesn't influence the operation of the user. The scale 26 can be disposed at the rear side (see FIG. 1), at two sides (see FIG. 2) of the base frame 14 or inside the base 16 (see FIG. 3) all of which can reach the expected effect.

The scale 26 and the console 20 can be connected through cable or by means of far infrared (in wireless way ).

The built-in program doesn't belong to the scope of the present invention so that no further descriptions are given hereinafter.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. An electric treadmill to whose console the weight of the operator is automatically sent, comprising an upright frame, a base frame, a base and a rear supporting bar, a console being mounted on said upright frame, a handrail being fitted to either side thereof, a motor-driven assembly being fitted to said base frame 14 which a continuous belt circles for an in-place rotation;
wherein the improvement is **characterized by**:
said electric treadmill having a scale in connection with said console so that the weight parameter of the operator can be automatically fed into said console whereupon an optimal exercise session for the operator is automatically calculated by an built-in program.

2. The electric treadmill as recited in claim 1, wherein said scale and said console are connected through cable or by means of far infrared (in wireless way).

3. An electric treadmill to whose console the weight of the operator is automatically sent, comprising an upright frame, a base frame, abase and a rear supporting bar, a console being mounted on said upright frame, a handrail being fitted to either side thereof, a motor-driven assembly being fitted to said base frame 14 which a continuous belt circles for an in-place rotation;
wherein the improvement is **characterized by**:
a scale in connection with said console being fitted to said base frame or said base of said treadmill so that the weight parameter of the operator can be automatically fed into said console.

4. The electric treadmill as recited in claim 1, wherein said scale and said console are connected through cable or by means of far infrared (in wireless way).
